# EUROPÄISCHE PATENTSCHRIFT

(11) **EP 2 029 492 B1**
(45) Veröffentlichungstag und Bekanntmachung des Hinweises auf die Patenterteilung: **18.10.2017**
(21) Anmeldenummer: 07725261.7
(22) Anmeldetag: 16.05.2007
(51) Int. Cl.: C02F 1/461, C02F 103/10

(54) **VORRICHTUNG ZUR ELEKTROCHEMISCHEN WASSERAUFBEREITUNG**
DEVICE FOR ELECTROCHEMICAL WATER PREPARATION
DISPOSITIF POUR LE TRAITEMENT ÉLECTROCHIMIQUE D'EAU

(30) Priorität: 16.06.2006 DE 102006028168
(43) Veröffentlichungstag der Anmeldung: 04.03.2009
(73) Patentinhaber: ThyssenKrupp Uhde Chlorine Engineers GmbH, 44141 Dortmund (DE)
(72) Erfinder: KIEFER, Randolf, 45892 Gelsenkirchen (DE); DULLE, Karl-Heinz, 50399 Olfen (DE); WOLTERING, Peter, 48485 Neuenkirchen (DE); OELMANN, Stefan, 58675 Hemer (DE); BÄUMER, Ulf-Steffen, 59423 Unna (DE); STOLP, Wolfram, 59071 Hamm (DE)
(74) Vertreter: thyssenkrupp Intellectual Property GmbH
(86) Internationale Anmeldenummer: PCT/EP2007/004345
(87) Internationale Veröffentlichungsnummer: WO 2007/144055

(56) Entgegenhaltungen:
- EP-A- 1 600 426
- US-A- 3 823 081
- US-A1- 2002 036 134
- US-A1- 2004 251 199

## Beschreibung

Die vorliegende Erfindung betrifft eine Elektrolysevorrichtung zur Wasserreinigung, umfassend eine Kathode, eine Anode und eine lonenaustauschmembran, die zwischen der Kathode und Anode angeordnet ist und mindestens umlaufend im Randbereich gehalten wird. Die Erfindung richtet sich auf eine Elektrolysevorrichtung zur Reinigung von sauren Wässern, die eine Kathode, eine Anode und eine Ionenaustauschmembran umfasst, wobei die Membran zwischen der Kathode und Anode angeordnet ist und mindestens umlaufend im Randbereich gehalten wird, wobei auf dem oberen und unteren Randbereich der Elektrolysevorrichtung eine Vielzahl von Zu- und Abläufen angeordnet sind, die mit dem Kathodenbeziehungsweise dem Anodenraum verbunden sind, so dass sich im Kathoden und dem Anodenraum eine Pfropfenströmung ausbildet, die im idealen Fall ein laminares Profil aufweist.

Die Sanierung schwefelsaurer Wässer aus Tagebaurestseen wird aufgrund der großen Wassermengen zur Zeit vor allem durch die Flutung mit ggf. konditioniertem Fremdwasser durchgeführt. Dieses Verfahren ist jedoch unter anderem stark begrenzt durch das zur Verfügung stehende Wasserangebot, den Aufwand zur Überleitung und die abzupuffernde Basenkapazität. Eine Sanierung der Restlochgewässer durch Kalkung ist in den meisten Fällen wegen des hohen stöchiometrischen Überschusses an basischen Stoffen unwirtschaftlich.

In der DE 19624023 B1 wird ein Verfahren zur Aufbereitung saurer Wässer offenbart, bei welchem der Wasseraufbereitungsprozess ohne die Beimengung von Zusatzstoffen zum aufzubereitenden Wasser durchgeführt wird. Der Aufbereltungseffekt wird im Gegensatz zur üblichen Neutralisation nicht durch die Zudosierung von Lauge zum Wasser mit hohem pH-Wert erreicht, sondern durch Abtrennung von Protonen infolge ihrer elektrochemischen Abscheidung in der kathodischen Teilreaktion des Elektrolyseprozesses, wie in den nachstehenden Bruttoreaktionsgleichungen gezeigt:
(1)

   4H⁺ + 4e⁻ -> 2H₂
(2)

   4H₂O + 4e⁻ -> 2H₂ + 4OH⁻

In gleicher Weise wirkt prinzipiell die simultan ablaufende elektrochemische Reduktion von im Wasser gelösten Sauerstoff zu Hydroxidionen neutralisierend.
(3)

   2H₂O + O₂+ 4e⁻ -> 4OH⁻

Die Reaktion (3) trägt jedoch nur geringfügig zur kathodischen Wasseraufbereitung bei. Durch den Einsatz einer Ionenaustauschmembran zwischen Anoden- und Kathodenraum der Elektrolysezelle wird zusätzlich erreicht, dass zur Anhebung des pH-Wertes, und der damit einher gehenden Hydrolyse und Fällung von Aluminium- und Schwermetallionen, auch der Salzgehalt der Wässer erheblich vermindert wird. Dabei wird eine Kopplung des kathodischen Wasseraufbereitungsprozesses mit einem anodischen Syntheseprozess vorgesehen. Bei Vorhandensein von Sulfationen können anodisch folgende Reaktionen ablaufen:
(4)

   2H₂O -> 4H⁻ + O₂ + 4e⁻
(5)

   2SO₄²⁻ -> S₂O₈²⁻ + 2e⁻

Bei einer Reaktion gemäß der Gleichung (4) werden die entstehenden Protonen durch die in den Anodenraum wandernden Sulfationen abgesättigt, wobei zunächst Schwefelsäure gebildet und aufkonzentriert wird. Im zweiten Fall werden Sulfationen zu Peroxodisulfat oxidiert und im Anodenraum angereichert. Durch nachfolgende Prozesse ist eine Gewinnung dieser Produkte möglich. In ähnlicher Weise kann der in der Kathodenreaktion gebildete Wasserstoff nachfolgend als Produkt verwertet werden.

GB 2057507 A oder DE 36 14 005 A1 beschreiben prinzipiell geeignete Elektrolysevorrichtungen für dieses vorgenannte Verfahren. Elektrolysezellen, wie sie für den industriellen Einsatz bei der Chlor-Alkali-Elektrolyse bekannt sind, werden in der DE 196 41125 beschrieben. Diese Zellen bestehen unter anderem aus einer kathodischen und anodischen Halbschale, in welchen die Kathode beziehungsweise die Anode angeordnet sind. Zwischen den Elektroden ist die lonenaustauschmembran lokalisiert, und der Innenraum jeder Halbschale wird durch die Elektrode in einen Elektrodenraum und einen Elektrodenrückraum geteilt. Der Elektrodenraum wird von der Membran und der Elektrode und der Elektrodenrückraum von der Elektrode und der jeweiligen Zellenrückwand begrenzt. Jede Zelle weist einen Zu- und einen Ablauf auf.

An diesen im Prinzip bekannten Verfahren und den bekannten Vorrichtungen ist nachteilig, dass bei den bekannten Elektrolysevorrichtungen sehr hohe Stromspannungen angelegt werden müssen, um Fluide zu reinigen, deren Ionenkonzentration im Vergleich zu klassischen Elektrolyseverfahren, wie bspw. der Chlor-Alkali-Elektrolyse, sehr gering sind und entsprechend schlecht leiten. Aus der EP 1600426 ist eine Elektrolysevorrichtung zur Wasserreinigung bekannt, umfassend eine Kathode, eine Anode und eine im Randbereich gehaltene, zwischen den Elektroden angeordnete lonenaustauschmembran, wobei im oberen und unteren Randbereich der Elektrolysevorrichtung eine Vielzahl von Zu- und Abläufen angeordnet ist. Die Anode kann dabei als Streckmetall und die Kathode plattenförmig eben ausgebildet sein. Diese Druckschrift offenbart eine Elektrolysevorrichtung mit mindestens drei Elektrodenräumen, wobei zwischen zwei Kathodenräumen jeweils eine Anionenaustauschermembran angeordnet ist, die zur Trennung der Elektrodenräume dient. Zur Erzielung eines gleichmäßigen Strömungsprofils in den Kathodenräumen werden Strömungs-Verteilerkomponenten vorgesehen, die bevorzugt in die Zellenrahmenkonstruktion der Elektrolysezelle integriert werden.

Aufgabe der Erfindung ist es somit, eine Vorrichtung zu offenbaren, die für Fluide mit geringen Ionenkonzentrationen geeignet ist und sich im bestimmungsgemäßen Betrieb durch einen geringen Energiebedarf auszeichnet.

Die Lösung dieser Aufgabe liefert eine Elektrolysevorrichtung zur Wasserreinigung mit den Merkmalen des Anspruchs 1. Die vorliegende Anmeldung offenbart eine Elektrolysevorrichtung zur Wasserreinigung, die eine Kathode, eine Anode und eine lonenaustauschmembran aufweist, wobei die Ionenaustauschmembran zwischen der Kathode und Anode angeordnet ist und mindestens umlaufend im Randbereich gehalten wird. Dabei sind auf dem oberen und unteren Randbereich der Elektrolysevorrichtung eine Vielzahl von Zu- und Abläufen angeordnet, die mit dem Kathoden- bzw. dem Anodenraum fluidisch verbunden sind.

Es wurde gefunden, dass sich ein weitgehend laminares Strömungsprofil mit relativ engem Verweilzeitspektrum, das durch eine Pfropfenströmung beschrieben werden kann, sich in der erfindungsgemäßen Vorrichtung ausbildet. Beim Einsatz dieser Vorrichtung konnten sehr gute Abbauergebnisse, bei gleichzeitig geringem Stromverbrauch beobachtet werden. Zum Aufbau einer stabilen laminar geschichteten Strömung und gleichzeitig geringem Stromverbrauch beträgt der Elektrodenabstand von der Ionentauschermembran maximal 5 mm und unterschreitet 1,5 mm nicht.

Eine vorteilhafte Ausführungsform besteht darin, dass die Elektrolysevorrichtung in der Bauwelse von Einzelzellen konstruiert Ist. Eine derartige Einzelzelle besteht im Wesentlichen aus zwei Halbschalen, wobei der äußerste Rand der Halbschalen als umlaufender Flansch ausgebildet ist, an den sich nach einer umlaufenden Kante ein Zellenrand anschließt, der die Zellenrückwand umrandet. Die Elektroden sind mittels Stegen von innen an der jeweiligen Zellenrückwand befestigt und den Stegen gegenüber, auf der der Membran zugewandten Elektrodenseite, sind Abstandselemente zur Fixierung der Membran und Kraftdurchleitung angeordnet. Dadurch wird die Elektrode sowie der Anoden- und Kathodenraum in mehrere parallele Kompartimente unterteilt.

Im bestimmungsgemäßen Betrieb werden eine Vielzahl derartiger Einzelzellen in einer Haltevorrichtung planparallel hintereinander aufgehängt, miteinander verspannt und nacheinander senkrecht zu den Membran bzw. Elektrodenflächen vom Strom durchflössen.

Vorteilhafter Weise sind die Zu- und Abläufe von der Membran aus gesehen hinter der Elektrode angeordnet und jedem Kompartiment ist mindestens ein Zulauf und ein Ablauf zugeordnet. Eine weitere Verbesserung besteht darin, dass der Raum zwischen Zellenrückwand und Elektrode, also der Elektrodenrückraum, über90 % mit einem inerten Material gefüllt ist, so dass das Wasser im bestimmungsgemäßen Betrieb bis auf geringe Randströmungen in dem Raum zwischen Elektrode und Membran geleitet wird. Idealerweise wird der Elektrodenrückraum vollständig geschlossen.

Zur verbesserten Strömungsführung für die Zu- und Ableitung von Fluiden ist das inerte Material im Bereich der Zu- und Abläufe so geformt oder weist eine entsprechende Aussparung auf, dass parallel zur oberen und unteren Zellenwand ein oder mehrere Kanäle ausgebildet sind. Das Fluid strömt dann durch den Spalt in den Kathoden- oder Anodenräum, welcher sich zwischen dem Rand der Jeweiligen Elektrode und dem Zellenrand ergibt. Idealerweise ist dieser Spalt zwischen oberer und unterer Kante der Elektroden und Zellenrand mindestens 0,5 mm und maximal 5 mm breit.

Da der Volumenstrom auf in der Kathodenhalbschale sehr groß ist, weist die Kathode zusätzlich an der oberen und an der unteren Kante, Aussparungen, Bohrungen oder dergleichen auf. Das in den Kathodenrückraum einströmende Wasser kann somit in geeigneter Weise in den Kathodenraum geleitet werden, ohne dass der Druck in der Zuleitung stark erhöht werden muss.

Idealerweise ist bei der erfindungsgemäßen Vorrichtung die Anode als Streckmetall und die Kathode als ebene Platte ausgebildet. Die den Elektrodenrückraum ausfüllenden Füllkörper, sind vorteilhafterweise an den senkrecht verlaufenden Kanten zur Entwässerung des Elektrodenrückraums und zur Vermeidung von Korrosion abgefasst.

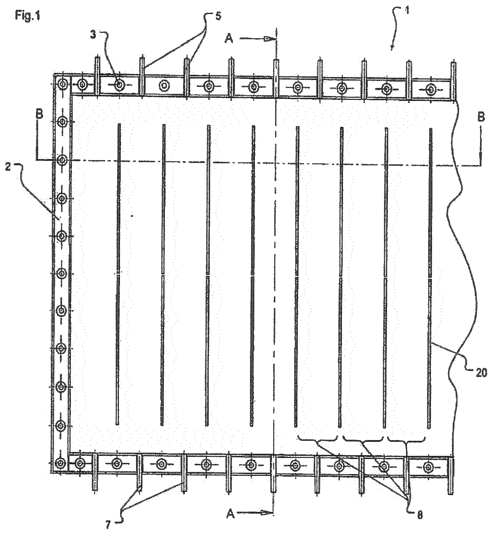

Nachfolgend werden in Fig. 1 bis 3 vorteilhafte Ausführungsformen der erfindungsgemäßen Vorrichtung näher beschrieben. Fig. 1 zeigt die Elektrolysezelle 1 in einer Draufsicht. Am umlaufenden Zellenflansch 2 sind in regelmäßigen Abständen Schraubendurdhführungen 3 vorgesehen. Am oberen Zellenrand 4, der in der Fig.1 nicht zu erkennen ist, sind eine Vielzahl von Zuläufen 5 angeordnet. Am ebenfalls nicht dargestellten unteren Zellenrand 6 befindet sich eine identische Anzahl von Abläufen 7.

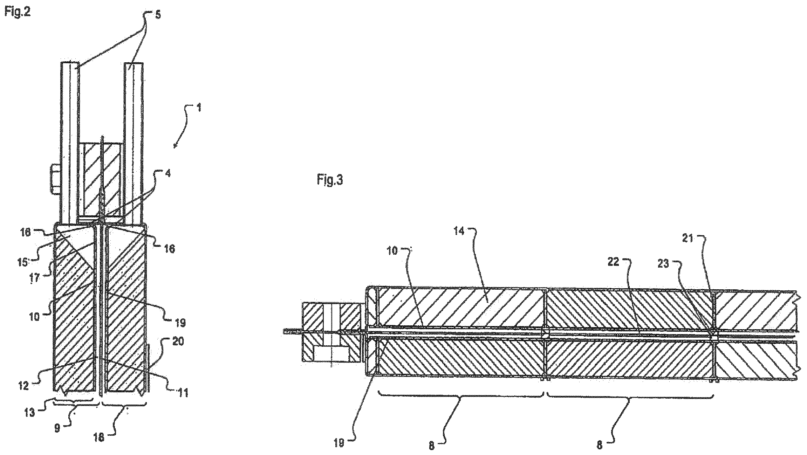

Die gesamte Elektrolysezelle 1 ist in Kompartimente 8 aufgeteilt, wobei jedem Kompartiment 8 ein Zulauf 5 und ein Ablauf 7 zugeordnet ist. Die Schnittdarstellung Fig. 2 zeigt den Zulaufbereich der Elektrolysezelle 1 in einer vertikalen Schnittdarstellung entlang der Linie A. Die Kathodenhalbschale 9 weist zwischen der Kathode 10 und der lonenaustauschmembran 11 einen Kathodenraum 12 auf. In den Kathodenrückraum 13 ist ein Füllkörper 14 aus einem Kunststoff eingelegt, der gegenüber dem Zulauf 5 winklig angeschnitten ist, so dass unterhalb des Zellenrandes 6 ein Kanal 15 mit dreieckigem Querschnitt entsteht. Der Verschluss des Kathodenrückraumes 13 führt zu einer vollständigen Umlenkung des Fluids in den Zellen über den Randspalt 16 und Öffnungen 17 in der Kathode 10 im Bereich des Kanals 15 in den Kathodenraum 12. Auf der Zellenrückwand ist weiterhin die Kontaktleiste 20 dargestellt, über welche benachbarte Elektrolysezellen 1 elektrisch leitend miteinander In Kontakt stehen.

Der Aufbau der Anodenhalbschale 18 und der dort enthaltenen Komponenten ist im Wesentlichen identisch. Nicht vorgesehen sind zusätzliche Öffnungen 17 in der Anode 19 in der Nähe des Randspaltes 16, da die Volumenströme kleiner sind als auf der Kathodenseite.

Fig. 3 zeigt eine Schnittdarstellung entlang der Linie B der Fig.1. Zu erkennen sind die Füllkörper 14, die in den Rückräumen der Elektroden eingebracht sind, wobei jeder Füllkörper 14 genau ein Kompartiment 8 ausfüllt und die Kompartimente 8 durch die Stege 21 gebildet werden, welche die Elektroden halten und mit der Rückwand der jeweiligen Zellenhalbschale verbunden sind. In dem Kathodenraum 12 und dem Anodenraum 22 sind im Bereich der Stege 21 Abstandshalter 23 angeordnet, welche die lonenaustauschmembran 11 lokal fixieren.

### Bezugszeichenliste

- 1: Elektrolysezelle
- 2: Zellenfransch
- 3: Schraubendurchführungen
- 4: Zellenrand (oberer)
- 5: Zulauf
- 6: Zellenrand (unterer)
- 7: Ablauf
- 8: Kompartiment
- 9: Kathodenhalbschale
- 10: Kathode
- 11: lonenaustauschmembran
- 12: Kathodenraum
- 13: Kathodenrückraum
- 14: Füllkörper
- 15: Kanal
- 16: Randspalt
- 17: Öffnungen
- 18: Anodenhalbschale
- 19: Anode
- 20: Kontaktleiste
- 21: Steg
- 22: Anodenraum
- 23: Abstandshalter

## Patentansprüche

1. Elektrolysevorrichtung zur Wasserreinigung, umfassend eine Kathode, eine Anode und eine lonenaustauschmembran, die zwischen der Kathode und Anode angeordnet ist und mindestens umlaufend im Randbereich gehalten wird,
**dadurch gekennzeichnet, dass**
(a) die Elektrolysevorrichtung in der Bauweise von Einzeizellen konstruiert ist und im Wesentlichen aus zwei Halbschalen gebildet wird,
(i) wobei der äußerste Rand der Halbschalen als umlaufender Flansch ausgebildet ist, an den sich nach einer umlaufenden Kante ein Zellenrand abschließt, der die Zellenrückwand umrandet,
(ii) wobei die Elektroden mittels Stegen von innen an der jeweiligen Zellenrückwand befestigt sind und den Stegen gegenüber, auf der der Membran zugewandten Elektrodenseite, Abstandselemente zur Fixierung der Membran und Kraftdurchleitung angeordnet sind, wodurch die Elektrode sowie der Anoden- und Kathodenraum, die sich zwischen der jeweiligen Elektrode und der Membran bilden, in mehrere parallele Kompartimente unterteilt werden.
(iii) wobei der Raum zwischen Zellenrückwand und Elektrode über 90 % mit einem inerten Material gefüllt ist, so dass das Wasser im bestimmungsgemäßen Betrieb bis auf geringe Randströmungen in den Raum zwischen Elektrode und Membran geleitet wird und
(b) auf dem oberen und unteren Randbereich der Elektrolysevotrichtung eine Vielzahl von Zu- und Abläufen angeordnet sind.

2. Elektrolysevorrichtung zur Wasserreinigung gemäß Anspruch 1,
**dadurch gekennzeichnet, dass**
die Zu- und Abläufe von der Membran aus gesehen hinter der Elektrode angeordnet sind und jedem Kompartiment mindestens ein Zulauf und ein Ablauf zugeordnet ist.

3. Elektrolysevorrichtung zur Wasserreinigung gemäß Anspruch 2,
**dadurch gekennzeichnet, dass**
das inerte Material im Bereich der Zu- und Abläufe so geformt ist oder eine entsprechende Aussparung aufweist, dass parallel zur Zellenwand ein oder mehrere Kanäle ausgebildet sind.

4. Elektrolysevorrichtung zur Wasserreinigung gemäß Anspruch 1 bis 3,
**dadurch gekennzeichnet, dass**
die obere und untere Kanten der Elektroden mindestens 0,5 mm und maximal 5 mm Abstand zum Zellenrand aufweisen.

5. Elektrolysevorrichtung zur Wasserreinigung gemäß Anspruch 1 bis 4,
**dadurch gekennzeichnet, dass**
die Kathode an der oberen und an der unteren Kante, die den Zu- beziehungsweise den Abläufen gegenüberliegen, Öffnungen, Aussparungen oder dergleichen aufweisen.

6. Elektrolysevorrichtung zur Wasserreinigung gemäß Anspruch 1 bis 5,
**dadurch gekennzeichnet, dass**
die Anode als Streckmetall und die Kathode als ebene Platte ausgebildet ist.

## Claims

1. Electrolysis device for the purification of water, comprising a cathode, an anode and an ion exchange membrane, which is arranged between the cathode and the anode and is held at least circumferentially in the peripheral area,
**characterized in that**
(a) the electrolysis device is structurally designed in the form of individual cells and is substantially formed by two half-shells,
(i) wherein the outermost border of the half-shells is formed as a circumferential flange, which is adjoined after a circumferential edge by a cell border which borders the rear wall of the cell,
(ii) wherein the electrodes are attached from the inside to the respective cell rear wall by means of webs and, opposite the webs, on the electrode side facing the membrane, spacing elements are arranged for fixing the membrane and conducting the power, whereby the electrode and the anode and cathode chambers that form between the respective electrode and the membrane are subdivided into a number of parallel compartments,
(iii) wherein the space between the cell rear wall and the electrode is filled to over 90% with an inert material, so that, during operation as intended, the water is directed into the space between the electrode and the membrane apart from small peripheral flows, and
(b) a multiplicity of feed inlets and discharge outlets are arranged on the upper and lower peripheral regions of the electrolysis device.

2. Electrolysis device for the purification of water according to Claim 1,
**characterized in that**
the feed inlets and discharge outlets are arranged behind the electrode, as seen from the membrane, and each compartment is assigned at least one feed inlet and one discharge outlet.

3. Electrolysis device for the purification of water according to Claim 2,
**characterized in that**
in the region of the feed inlets and discharge outlets, the inert material is shaped in such a way, or has such an aperture, that one or more channels are formed parallel to the cell wall.

4. Electrolysis device for the purification of water according to Claims 1 to 3,
**characterized in that**
the upper and lower edges of the electrodes are at a distance from the cell border of at least 0.5 mm and at most 5 mm.

5. Electrolysis device for the purification of water according to Claims 1 to 4,
**characterized in that**
the cathode comprises openings, apertures or the like at the upper edge and the lower edge that respectively lie opposite the feed inlets and discharge outlets.

6. Electrolysis device for the purification of water according to Claims 1 to 5,
**characterized in that**
the anode is formed as an expanded metal mesh and the cathode is formed as a planar sheet.

## Revendications

1. Dispositif d'électrolyse destiné à la purification de l'eau, comprenant une cathode, une anode et une membrane échangeuse d'ions, cette dernière étant disposée entre la cathode et l'anode et maintenue au moins sur tout le pourtour, dans la zone de la bordure, **caractérisé en ce que**
(a) le dispositif d'électrolyse est conçu à la manière de cellules individuelles et est formé pour l'essentiel de deux demi-coques ;
(i) la bordure des demi-coques qui se trouve le plus à l'extérieur étant conçue sous la forme d'une bride périphérique, à laquelle vient se raccorder une bordure de cellule à l'issue d'une arête périphérique, laquelle bordure de cellule borde la paroi arrière de cellule ;
(ii) les électrodes étant fixées depuis l'intérieur à la paroi arrière respective de cellule, au moyen de traverses, et des éléments d'écartement destinés à la fixation de la membrane et à la transmission de force étant disposés, vis-à-vis des traverses, sur la face des électrodes qui est tournée vers la membrane, ce qui permet ainsi de diviser l'électrode, ainsi que la chambre de l'anode et la chambre de la cathode, lesquelles se forment entre l'électrode respective et la membrane, en plusieurs compartiments parallèles ;
(iii) la chambre se trouvant entre la paroi arrière de cellule et l'électrode étant remplie à plus de 90 % d'un matériau inerte, de telle sorte que, dans le cas d'un fonctionnement conforme, l'eau est conduite dans la chambre se trouvant entre l'électrode et la membrane, à l'exception de faibles flux marginaux ; et
(b) une pluralité de conduites d'alimentation et d'évacuation sont disposées sur la zone supérieure et inférieure de la bordure du dispositif d'électrolyse.

2. Dispositif d'électrolyse destiné à la purification de l'eau selon la revendication 1,
**caractérisé en ce que**
les conduites d'alimentation et d'évacuation sont disposées à l'arrière de l'électrode, considéré dans une perspective vue depuis la membrane, et au moins une conduite d'alimentation et d'évacuation est associée à chaque compartiment.

3. Dispositif d'électrolyse destiné à la purification de l'eau selon la revendication 2,
**caractérisé en ce que**
le matériau inerte est moulé au niveau des conduites d'alimentation et d'évacuation ou présente un renfoncement correspondant, de telle sorte qu'un ou plusieurs canaux sont conçus de manière parallèle à la paroi de la cellule.

4. Dispositif d'électrolyse destiné à la purification de l'eau selon la revendication 1 à 3,
**caractérisé en ce que**
les arêtes supérieure et inférieure des électrodes présentent un écartement d'au moins 0,5 mm et d'au plus 5 mm par rapport à la bordure de cellule.

5. Dispositif d'électrolyse destiné à la purification de l'eau selon la revendication 1 à 4,
**caractérisé en ce que**
la cathode qui se trouve au niveau de l'arête supérieure ainsi que celle qui se trouve au niveau de l'arête inférieure, lesquelles sont situées à l'opposé des conduites d'alimentation, respectivement d'évacuation, présentent des ouvertures, des renfoncements ou des géométries similaires.

6. Dispositif d'électrolyse destiné à la purification de l'eau selon la revendication 1 à 5,
**caractérisé en ce que**
l'anode est conçue sous la forme d'un métal déployé et la cathode est conçue sous la forme d'une plaque plane.
